# EUROPÄISCHE PATENTSCHRIFT

(11) **EP 1 334 331 B1**
(45) Veröffentlichungstag und Bekanntmachung des Hinweises auf die Patenterteilung: **23.06.2010**
(21) Anmeldenummer: 01994620.1
(22) Anmeldetag: 26.10.2001
(51) Int. Cl.: G01D 5/244, G01B 7/30, B62D 15/02

(54) **VERFAHREN ZUR SIGNALAUSWERTUNG EINER OPTOELEKTRONISCHEN WEG- ODER WINKELMESSEINRICHTUNG SOWIE VERWENDUNG EINES SOLCHEN VERFAHRENS**
METHOD FOR EVALUATING A SIGNAL IN AN OPTOELECTRONIC DISTANCE OR ANGLE MEASURING DEVICE AND USE OF SAID METHOD
PROCEDE D'INTERPRETATION DE SIGNAUX ISSUS D'UN DISPOSITIF OPTOELECTRONIQUE DE MESURE DE TRAJECTOIRE ET D'ANGLE, ET MISE EN OEUVRE D'UN PROCEDE DE CE TYPE

(30) Priorität: 15.11.2000 DE 10056604
(43) Veröffentlichungstag der Anmeldung: 13.08.2003
(73) Patentinhaber: Leopold Kostal GmbH & Co. KG, 58507 Lüdenscheid (DE)
(72) Erfinder: BLÄSING, Frank, 59457 Werl (DE); SCHIRP, Christian, 44866 Bochum (DE)
(86) Internationale Anmeldenummer: PCT/EP2001/012394
(87) Internationale Veröffentlichungsnummer: WO 2002/040945

(56) Entgegenhaltungen:
- EP-A- 0 331 828
- EP-A- 0 331 828
- EP-A- 0 374 295
- EP-A- 0 374 295
- EP-A- 0 749 003
- EP-A- 0 911 610
- EP-A- 0 911 610
- DE-A- 19 612 660
- DE-A- 19 612 660
- US-A- 5 332 895
- US-A- 5 644 127
- US-A- 5 644 127

## Beschreibung

Die Erfindung betrifft ein Verfahren zur Signalauswertung einer optoelektronischen Weg- oder Winkelmeßeinrichtung mit einer gegenüber einer aus einer Lichtquelle und einem eine Vielzahl von optoelektronischen Wandlerelementen aufweisenden Sensorarray umfassenden Sende-Empfangseinheit relativ bewegbaren Codescheibe mit zumindest einer digitalen Codespur, welches Verfahren eine Zuordnung der zumindest einen Codespur bestimmten Wandlerelementen des Sensorarrays umfaßt. Ferner betrifft die Erfindung eine bevorzugte Verwendung eines solchen Verfahrens.

Weg- und Winkelmeßeinrichtungen werden vielfach zur automatischen Positionierung und Messung in Werkzeugmaschinen und Koordinatenmeßgeräten eingesetzt. Drehwinkelsensoren dienen beispielsweise im Kraftfahrzeugbereich zum Bestimmen der absoluten Winkelstellung des Lenkrades und werden daher auch als Lenkwinkelsensoren bezeichnet. Derartige optoelektronische Lenkwinkelsensoren bestehen im wesentlichen aus einer an die Drehbewegung des Lenkrades gekoppelten Codescheibe als Rotor sowie statorseitig aus einer Sende-Empfangseinheit. Die Sende-Empfangseinheit umfaßt eine auf der einen Seite der Codescheibe befindliche Lichtquelle, beispielsweise eine LED-Anordnung und auf der anderen Seite der Codescheibe eine Empfangseinheit, die üblicherweise ein Zeilensensor mit zahlreichen nebeneinanderliegenden Wandlerelementen ist. Als Codierung der Codescheibe wird mitunter ein digitaler Code eingesetzt, der aus mehreren, parallelen Codespuren besteht und beispielsweise nach Art eines Gray-Codes aufgebaut ist.

Der Lenkwinkel wird bei Kraftfahrzeugen benötigt, um mit diesem Wert etwa ein Fahrdynamikregelsystem beaufschlagen zu können. Ein solches Fahrdynamikregelsystem erhält neben den genannten Lenkwinkelwerten weitere Meßdaten, etwa die Raddrehzahl oder die Drehung des Kraftfahrzeuges um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.

Bei den vorbekannten Weg- oder Winkelmeßeinrichtungen erfolgt eine Auswertung der Signalamplituden der jeder Codespur zugeordneten Wandlerelemente durch einen Vergleich der Signalamplitude mit einem vorgegebenen Signalschwellwert. Wird der Signalschwellwert überschritten, erfolgt eine Auswertung, der Signalamplitude der dieser Codespur zugeordneten Wandlerelemente als durch die Codierung der Codespur belichtet. Ist die Signalamplitude kleiner als der vorgegebene Signalschwellwert erfolgt eine Auswertung dahingehend, daß durch die Codierung dieser Codespur eine Belichtung der dieser Codespur zugeordneten Wandlerelemente nicht vorliegt.

Eine Zuordnung bestimmter Wandlerelemente zu einer Codespur wird bei dem vorbekannten Verfahren eingesetzt, um ein Spiel der Codescheibe bei ihrer Bewegung gegenüber der Sende-Empfangseinheit zu kompensieren. Zu diesem Zweck ist der Codierung zumindest eine Referenzspur zugeordnet. Da der Abstand der Codespuren zu der Referenzspur über die Länge der Codespuren hin gleich ist, kann bei Bestimmung der Lage der Referenzspur auf dem Sensorarray ermittelt werden, welche Wandlerelemente durch welche Codespuren belichtet werden können.

Auch wenn mit dem vorbekannten Verfahren unter gleichbleibenden, auf eine Signaldetektion Einfluß nehmenden Bedingungen hinreichend genaue Ergebnisse erzielt werden können, können die Meßergebnisse jedoch bei solchen Weg- und Winkelmeßeinrichtungen verfälscht sein, wenn beispielsweise durch umgebungsbedingte Einflüsse die bei der Konzeption der Weg- oder Winkelmeßeinrichtung vorgegebenen idealisierten Meßparameter sich ändern. Insbesondere bei einem Einsatz einer solchen Winkelmeßeinrichtung als Lenkwinkelsensor in einem Kraftfahrzeug ist eine exakte Winkeldetektion unter unterschiedlichsten Einflüssen zu gewährleisten. Beeinflussen kann eine solche Meßanordnung beispielsweise Streulicht, ein Beschlagen oder Vereisen oder auch ein Verstauben der Codescheibe, wobei in diesen beispielhaft genannten Fällen oftmals der Signalschwellwert nicht nur bei einer tatsächlichen direkten Belichtung durch die Codierung einer Codespur überschritten wird, sondern auch durch die einer solchen Codespur zugeordneten Wandlerelemente belichtendes Streulicht. Entsprechend kann beispielsweise bei einem Verstauben auch der Signalschwellwert trotz Belichtung durch die Codierung einer Codespur nicht überschritten werden. In diesen Fällen ist der aus einem Lenkwinkelsensor ausgelesene Winkelwert fehlerbehaftet; entsprechend sind die auf diesen Wert aufbauenden nachfolgenden Aus- und Bewertungen ebenfalls fehlerbehaftet.

Die EP 0 911 610 A1 offenbart ein Verfahren gemäß dem Oberbegrift des Patentanspruchs 1.

Ausgehend von diesem diskutierten Stand der Technik liegt der Erfindung daher die Aufgabe zugrunde, ein eingangs genanntes gattungsgemäßes Verfahren dergestalt weiterzubilden, daß die oben aufgezeigten Nachteile zumindest weitestgehend vermieden werden können.

Diese Aufgabe wird erfindungsgemäß dadurch gelöst, daß zur Auswertung der Signalamplituden der einer Codespur zugeordneten Wandlerelemente der relative Helligkeitsunterschied zwischen dem bei einer Belichtung relativ helleren Codespursignal und einem relativ dunkleren Nichtspursignal ermittelt wird und in Abhängigkeit von dem ermittelten Helligkeitsunterschied eine Feststellung erfolgt, ob die der Codespur zugeordneten Wandlerelemente durch die Codierung belichtet oder unbelichtet sind.

Bei dem erfindungsgemäßen Verfahren erfolgt eine Auswertung der einer Codespur zugeordneten Signalamplitude im Gegensatz zum vorbekannten Stand der Technik nicht im Vergleich zu einem vorgegebenen, feststehenden absoluten Signalschwellwert, sondern durch eine Ermittlung des relativen Helligkeitsunterschieds zwischen dem bei einer Belichtung relativ helleren Codespursignal und einem dem gegenüber relativ dunkleren Nichtspursignal. Die Auswertung erfolgt somit grundsätzlich unabhängig von einem lediglich die absolute Signalamplitude berücksichtigenden Signalschwellwert. Die Auswertung der Signalamplituden ist auf diese Weise sehr viel empfindlicher, so daß die Entscheidungsschwelle auf einem wesentlich niedrigeren Niveau angesiedelt sein kann. Auf diese Weise lassen sich umgebungsbedingte Einflüsse durch die Relativauswertung kompensieren. Bei einer möglichen, auch nur lokalen Erniedrigung der die Wandlerelemente des Sensorarrays belichtenden Leuchtstärke, bei der beispielsweise beim vorbekannten Stand der Technik eine Signalerkennung nicht mehr erfolgen würde, bleibt weiterhin ein detekierbarer Kontrast zwischen einer bestimmte Wandlerelemente des Sensorarrays belichtenden Codespur bzw. Codespurabschnittes und den durch diese Codespuren nicht belichteten Nichtspurabschnitten vorhanden, so daß die gewünschte Auswertung uneingeschränkt durchgeführt werden kann. Eine Auswertung der Signale einer Codespur erfolgt dann in Abhängigkeit von dem ermittelten Helligkeitsunterschied zwischen den bei einer Belichtung relativ helleren Codespursignal und einem relativ dunkleren Nichtspursignal durch eine Feststellung, ob die der zumindest einen Codespur zugeordneten Wandlerelemente durch die Codierung belichtet oder unbelichtet sind.

Der Helligkeitsunterschied zwischen den Signalamplituden einer Codespur bzw. einer Nichtcodespur kann beispielsweise durch eine Differenzbetrachtung dieser Signalamplituden erfolgen, wobei als Signalschwellwert ein vorgegebener Helligkeitsunterschied dient. Zum Ermitteln des relativen Helligkeitsunterschiedes der beiden Signalamplituden kann doch auch vorgesehen sein, diese in ein Verhältnis zueinander zu setzen, wobei dann als Signalschwellwert ein vorgegebenes Verhältnis dient.

Als relativ dunklere Nichtcodespur kann ein sich über den möglichen Bewegungsbetrag der Codescheibe gleichbleibende Dunkelspur vorgesehen sein, die sich beispielsweise neben der digitalen Codierung befindet. Es besteht jedoch auch die Möglichkeit, bei einem Einsatz von mehreren parallel zueinander verlaufenden Codespuren, die ohnehin vorhandenen Zwischenräume zwischen den Codespuren als sogenannte Zwischenspuren zu verwenden, um die diesen Zwischenspuren zugeordneten Wandlerelemente des Sensorarrays als Nichtspursignale auszuwerten. Bei besonders widrigen, kontrastarmen Meßbedingungen kann es jedoch vorkommen, daß die zur Erfassung eines Nichtspursignals vorgesehenen Wandlerelemente des Sensorarrays bei einer Belichtung durch die beiden benachbarten Codespuren ebenfalls in etwa mit derselben Helligkeit belichtet werden können. Folglich ist der sich einstellende Kontrast zwischen dem Zwischenspursignal und dem Codespursignal bei einer Belichtung sehr gering, unter Umständen zu gering, um auf eine Belichtung der den beiden Codespuren zugeordneten Wandlerelemente schließen zu können. In solchen Fällen kann dennoch ein exaktes Meßergebnis erzielt werden, wenn als Nichtspursignal ein entsprechend dunkleres herangezogen wird. Ferner besteht die Möglichkeit, zusätzlich einen absoluten Signalschwellwert auf relativ hohem Niveau zu setzen, so daß auf eine Belichtung der einer Codespur zugeordneten Wandlerelemente geschlossen werden kann, wenn entweder der relative Helligkeitsunterschied zwischen der Signalamplitude der Codespur und einem Nichtspursignal entsprechend groß ist oder die Signalamplitude der einer Codespur zugeordneten Wandlerelemente den absoluten Signalschwellwert überschreitet.

Zur Steigerung des relativen Helligkeitsunterschiedes bzw. des Kontrastes kann ferner vorgesehen sein, in das Auswerteverfahren Verfahrensschritte zum Anpassen der Auswertung der Signalamplituden an sich ändernde auf die Amplitudenauswertung Einfluß nehmende Parameter vorzunehmen. Eine solche Adaption kann durch eine Erfassung der Signalamplitude eines Referenzsignales, anschließendes Auswerten der Signalamplitude des Referenzsignales und ferner anschließendes Adaptieren zumindest eines zur Amplitudenauswertung relevanten Parameters erfolgen.

Bei dieser Erweiterung des Verfahrens ist vorgesehen, daß zur Kompensation von sich ändernden Meßbedingungen zumindest ein zur Amplitudenauswertung relevanter Parameter adaptiert wird. Dies erfolgt dadurch, daß neben dem Signal der zumindest einen Codespur die Signalamplitude eines Referenzsignales erfaßt wird. Als Referenzsignal kann grundsätzlich jede Codierung der Codescheibe dienen, durch die über mehrere Codeschritte hinweg bestimmte Wandlerelemente des Sensorarrays belichtet werden. Zweckmäßigerweise werden bei Verwendung eines solchen Referenzsignals lediglich diejenigen Bereiche als tatsächliches Referenzsignal eingesetzt, in denen durch die entsprechende Stellung der Codescheibe sichergestellt ist, daß die dieser Codespur zugeordneten Wandlerelemente tatsächlich belichtet werden. In einer weiteren Ausgestaltung kann jedoch auch vorgesehen sein, daß das Referenzsignal durch eine eigene Spur der Codescheibe bereitgestellt wird, wobei sich für diesen Zweck insbesondere das oder die Referenzspuren eignen, die üblicherweise auch zur Kompensation von Bewegungen der Codescheibe in Querrichtung zur Erstreckung der Codierung vorgenommen werden. In einem weiteren Verfahrensschritt wird die Signalamplitude des Referenzsignales ausgewertet und gegebenenfalls mit einem Absolutwert oder mit zuvor erfaßten und gespeicherten Referenzsignalamplituden verglichen. Anschließend erfolgt eine Adaption zumindest eines der zur Amplitudenauswertung relevanten Parameters im Sinne des Ergebnisses der Auswertung der Signalamplitude des Referenzsignals. Ist beispielsweise die Signalamplitude des Referenzsignales gegenüber früheren Referenzsignalamplituden reduziert, beispielsweise durch ein Beschlagen der Codescheibe oder durch auf der Codescheibe abgelagerten Staub, kann dieses dadurch kompensiert werden, daß die Belichtungszeit bzw. die zur Erfassung einer Signalamplitude benötigte Meßschrittanzahl als für die Auswertung der Signalamplituden relevanter Parameter erhöht wird. Ebenfalls kann die Leuchtstärke der Lichtquelle erhöht werden, so daß die Signalamplitude des Referenzsignales nach dieser Adaption wieder den ursprünglich eingerichteten Wert aufweist.

Die Empfindlichkeit der Adaption kann unterschiedlich betrieben werden. Beispielsweise kann vorgesehen sein, daß der Schritt des Auswertens der Signalamplitude des Referenzsignals eine Mittelwertbildung über eine bestimmte Meßschrittanzahl umfaßt. Auf diese Weise erfolgt eine gedämpfte Adaption des Systems nach dem Prinzip einer gleitenden Mittelwertadaption. Die Adaptionszeit ist bei Betreiben des Verfahrens auf diese Art und Weise in Abhängigkeit von der gewünschten Meßschrittanzahl langsamer als ein System, bei dem eine Adaption bei jedem Meßschritt erfolgt. Eine Adaption des zur Signalauswertung relevanten Parameters erfolgt in Abhängigkeit von dem ermittelten Mittelwert.

Ferner kann vorgesehen sein, daß die Auswertung der Signalamplitude des Referenzsignales einen Vergleich mit einer Referenzsignalamplitude beinhaltet, beispielsweise einer oder mehrerer vorangegangener, um beispielsweise den Gang der Änderungen dokumentieren zu können und gegebenenfalls eine Interpolation bezüglich des Umfanges zukünftiger Änderungen getroffen werden können.

Anhand von zwei Diagrammen ist nachfolgend der Gegenstand des beanspruchten Verfahrens nochmals beschrieben. Es zeigen:
- **Fig. 1:**: Ein Signalamplitudendiagramm ausgelesen aus einem Zeilensensor eines optoelektronischen Lenkwinkelsensors bei normalen Umgebungsbedingungen und
- **Fig. 2:**: Ein Diagramm entsprechend dem Diagramm der Figur 1 beim Auslesen derselben Winkelstellung jedoch mit vereister Codescheibe.

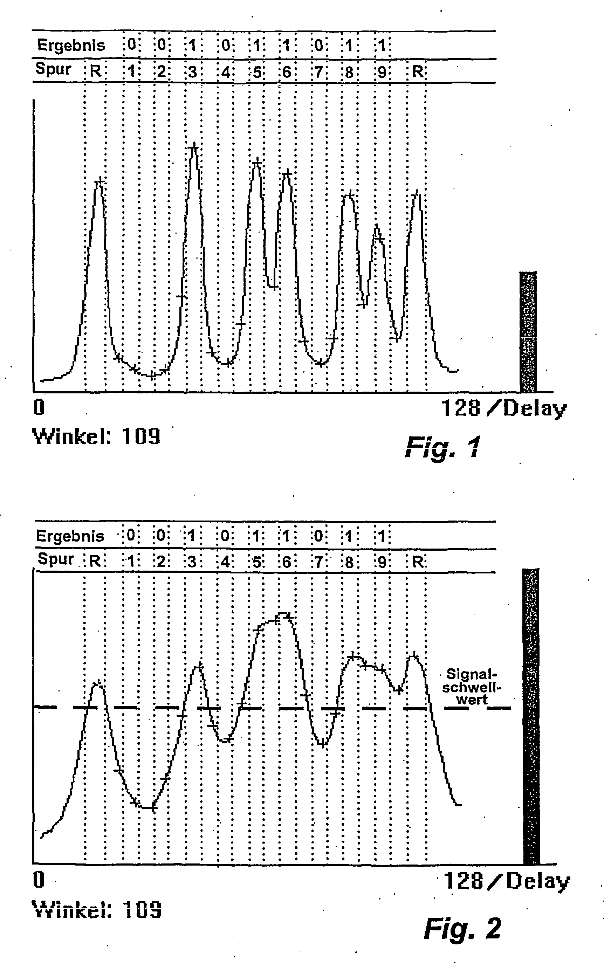

In dem Diagramm der Figur 1 sind auf der x-Achse die einzelnen Wandlerelemente eines Zeilensensors eines Lenkwinkelsensors dargestellt. Auf der y-Achse ist die bei den einzelnen Wandlerelementen ausgelesenen Signalamplitude aufgetragen. Die in Figur 1 dargestellte Situation zeigt ein Ausleseergebnis des Zeilensensors bei einem bestimmten Winkel. Die dem Lenkwinkelsensor zugeordnete Codescheibe umfaßt neun parallel zueinander verlaufende Codespuren, die als Codierung einen sogenannten Gray-Code tragen. Eingefaßt sind die parallel zueinander verlaufenden Codespuren durch jeweils eine Referenzspur, durch die in jeder Stellung der Codescheibe zu dem Zeilensensor eine Belichtung der photosensitiven Oberfläche des Zeilensensors erfolgt. In Figur 1 sind die Referenzspuren mit "R" gekennzeichnet; die einzelnen Spuren mit "1" bis "9". Die Zwischenspursignale sind über die zwischen den einzehen Spuren liegenden Wandlerelemente abtastbar. Jeder Codespur sind eine bestimmte Anzahl von Wandlerelementen der Sensorzeile zugeordnet, beispielsweise drei oder fünf. Die Zuordnung bestimmter Wandlerelemente zu bestimmten Codespuren bzw. zu sogenannten Zwischenspuren erfolgt durch eine Bestimmung derjenigen Wandlerelemente, die sich in einem bestimmten Abstand zu den Referenzspuren befinden. Dies ist möglich, da der Abstand der Codespuren von den Referenzspuren durch den Aufbau der Codescheibe gegeben und somit bekannt ist.

Die Referenzspuren dienen zum Kompensieren von quer zur Bewegungsrichtung der Codespuren stattfindenden Bewegungen der Codescheibe bei ihrer Bewegung, indem durch den bekannten Abstand der Codespuren voneinander nach einer Detektion der Referenzspuren R bestimmte Wandlerelemente des Zeilensensors einer bestimmten Codespur zugeordnet werden können. Die zwischen den den Codespuren zugeordneten Wandlerelementen befindlichen Wandlerelemente des Zeilensenors werden ebenfalls ausgewertet und dienen durch die Bereitstellung eines Nichtspursignales bzw. eines Zwischenspursignales als Referenzgröße. Zum Auswerten des in Figur 1 gezeigten Ausleseergebnisses wird der relative Helligkeitsunterschied zwischen der Signalamplitude einer Codespur und derjenigen einer benachbarten Nichtcodespur - jeweils dargestellt in Figur 1 durch die Kreuze in der Kurve, die die errechnete Signalamplitude aus den diese Spur abtastenden Wandlerelementen darstellen - bestimmt, beispielsweise durch Bilden eines Verhältnisses. Aus Figur 1 ist erkennbar, daß der relative Helligkeitsunterschied zwischen den Signalamplituden der Spuren 1, 2, 4 und 7 bezüglich der benachbarten Amplituden der Zwischenspursignale nur sehr gering ist. Bei einem Vergleich der Verhältnisse der Signalamplituden der Codespuren 1, 2, 4 und 7 zu den benachbarten Zwischenspuramplituden wird ein vorbestimmter Schwellwert nicht überschritten. Folglich werden diese Spuren als durch die Codierung der Codescheibe unbelichtet angesehen, wie dies in Figur 1 in der Rubrik "Ergebnis" durch jeweils eine "0" dargestellt ist. Die Signalamplituden der den Codespuren 3, 5, 6, 8 und 9 zugeordneten Wandlerelemente des Zeilensensors ist bezüglich der ermittelten Helligkeit um ein Vielfaches höher als die Helligkeit der benachbarten Zwischenspursignale. Folglich gelten diese Spuren als belichtet, was in Figur 1 durch jeweils eine "1" wiedergeben ist.

Die Darstellung der Figur 1 zeigt einen Lenkwinkelsensor, der unter normalen Umgebungsbedingungen arbeitet. Im Gegensatz zu dem in Figur 1 gezeigten Ausleseergebnis ist in Figur 2 ein Ausleseergebnis des Zeilensensors gezeigt, wobei bei dem Lenkwinkelsensor infolge widriger Umgebungsbedingungen die Codescheibe vereist ist. Die Folge ist, daß die einzelnen Spuren nicht unerheblich auch durch Streulicht belichtet werden, wie dies insbesondere durch die hohen Signalamplituden der Nichtspursignale zu erkennen ist. Zur Erhöhung des Signalkontrastes zwischen den einer Codespur zugeordneten Signalamplituden und denjenigen der Zwischenspursignale ist in Adaption an die geänderten Meßbedingungen die Belichtungszeit verlängert worden. Zusätzlich ist zur Auswertung der Codespursignale ein absolutes Schwellwertsignal, beispielsweise zwischen 70 und 80 % der Referenzspuramplitude gesetzt worden.

Die einer Codespur zugeordneten Wandlerelemente des Zeilensensors gelten dann als von der Codierung der Codescheibe belichtet, wenn entweder die relativen Helligkeitsunterschiede zwischen der Signalamplitude einer Codespur und derjenigen einer benachbarten Zwischencodespur ausreichend hoch ist, beispielsweise bei der Codespur 3, oder deren absolute Signalamplitude den gesetzten Schwellwert überschreiten, bei denen jedoch der relative Helligkeitsunterschied zu benachbarten Zwischenspuren gering ist. Dies ist bei den Codespuren 5, 6, 8 und 9 der Fall. Dieser Auswertung liegt die Beobachtung zugrunde, daß die den zwischen den Codespuren befindlichen Zwischenspuren zugeordneten Wandlerelemente bei derartigen Meßbedingungen bei der Belichtung der den Codespuren zugeordneten Wandlerelementen durch Streulicht ebenfalls belichtet werden.

Das erfindungsgemäße Verfahren eignet sich insbesondere zur Signalauswertung von solchen optoelektronischen Weg- oder Winkelmeßeinrichtungen, die wechselnden oder sich ändernden Umgebungsbedingungen ausgesetzt sind. Daher betrifft eine bevorzugte Verwendung eines solchen Verfahrens die Verwendung bei einer Signalauswertung von Lenkwinkelsensoren bei Kraftfahrzeugen.

## Patentansprüche

1. Verfahren zur Signalauswertung einer optoelektronischen Weg- oder Winkelmeßeinrichtung mit einer gegenüber einer aus einer Lichtquelle und einem eine Vielzahl von Wandlerelementen aufweisenden Sensorarray umfassenden Sende-Empfangseinheit relativ bewegbaren Codescheibe mit zumindest einer digitalen Codespur und wahlweise zumindest einer Referenzspur, welches Verfahren eine Zuordnung der zumindest einen Codespur bestimmten Wandlerelementen des Sensorarrays umfaßt, **dadurch gekennzeichnet, dass** zur Auswertung der Signalamplituden der einer Codespur zugeordneten Wandlerelemente der relative Helligkeitsunterschied zwischen dem bei einer Belichtung relativ helleren Codespursignal und einem relativ dunkleren Nichtspursignal nicht einer Codespur zugeordneter Wandlerelemente ermittelt wird und in Abhängigkeit von dem ermittelten Helligkeitsunterschied eine Feststellung erfolgt, ob die der Codespur zugeordneten Wandlerelemente durch die Codierung belichtet oder unbelichtet sind.

2. Verfahren nach Anspruch 1, **dadurch gekennzeichnet, daß** der Helligkeitsunterschied durch eine Differenzbetrachtung der Signalamplituden der einer Codespur bzw. einer Nichtcodespur zugeordneten Wandlerelemente ermittelt wird und als Signalschwellwert für die Feststellung, ob die der Codespur zugeordneten Wandlerelemente durch die Codierung belichtet oder unbelichtet sind, ein vorgegebener Helligkeitsunterschied eingesetzt wird.

3. Verfahren nach Anspruch 1, **dadurch gekennzeichnet, daß** zum Ermitteln des relativen Helligkeitsunterschiedes die Signalamplituden der einer Codespur bzw. einer Nichtcodespur zugeordneten Wandlerelemente ins Verhältnis zueinander gesetzt werden und als Signalschwellwert für die Feststellung, ob die der Codespur zugeordneten Wandlerelemente durch die Codierung belichtet oder unbelichtet sind, ein vorgegebenes Verhältnis eingesetzt wird.

4. Verfahren nach einem der Ansprüche 1 bis 3, **dadurch gekennzeichnet, daß** für die Feststellung, ob die der Codespur zugeordneten Wandlerelemente durch die Codierung belichtet oder unbelichtet sind, zusätzlich ein absoluter Signalschwellwert durch die Signalamplitude der der zumindest einen Codespur zugeordneten Wandlerelemente über- bzw. unterschritten sein muß.

5. Verfahrens nach einem der Ansprüche 2 bis 4, **dadurch gekennzeichnet, daß** der Signalschwellwert an sich ändernde Meßparameter angepaßt wird.

6. Verfahren nach Anspruch 5, **dadurch gekennzeichnet, daß** ein Anpassen der Signalschwellwerte folgende Schritt beinhaltet:
- Erfassen der Signalamplitude eines Referenzsignales zumindest eines durch eine Codespur oder Referenzspur tatsächlich belichteten Wandlerelemente
- Auswerten der Signalamplitude des Referenzsignales
- Anpassen des Signalschwellwertes im Hinblick auf die ermittelte Signalamplitude des Referenzsignales.

7. Verfahren nach Anspruch 6, **dadurch gekennzeichnet, daß** der Schritt des Auswertens der Signalamplitude des Referenzsignales eine Mittelwertbildung über eine bestimmte Meßschrittanzahl umfaßt und eine Adaption des zumindest einen zur Signalauswertung relevanten Parameters in Abhängigkeit von dem ermittelten Mittelwert vorgenommen wird.

8. Verfahren nach Anspruch 6 oder 7, **dadurch gekennzeichnet, daß** die Auswertung der Signalamplitude des Referenzsignals einen Vergleich mit einer Referenzsignalamplitude beinhaltet.

9. Verfahren nach einem der Ansprüche 6 bis 8, **dadurch gekennzeichnet, daß** zur Adaption des zumindest einen zur Signalauswertung relevanten Parameters die Belichtungszeit geändert wird.

10. Verfahren nach einem der Ansprüche 6 bis 9, **dadurch gekennzeichnet, daß** zur Adaption des zumindest einen zur Signalauswertung relevanten Parameters die Leuchtstärke der Lichtquelle geändert wird.

11. Verfahren nach einem der Ansprüche 1 bis 10, **dadurch gekennzeichnet, daß** zur Adaption des zumindest einen zur Signalauswertung relevanten Parameters der Signalschwellwert zur Unter-scheidung, ob die einer Codespur zugeordneten Wandlerelemente durch die Codierung belichtet oder unbelichtet sind, geändert wird.

12. Verwendung eines Verfahrens nach einem der Ansprüche 1 bis 11 zum Auswerten der Signale eines optoelektronischen Lenkwinkelsensors eines Kraftfahrzeuges.

## Claims

1. Process for evaluating the signals from an optoelectronic device for measuring displacement or angle, having a code disk which has at least one digital code track and, optionally, at least one reference track, and being relatively moveable in respect of a transceiver unit comprising a light source and a sensor array featuring a plurality of transducer elements, the said process comprising an assignment of the at least one code track to certain converter elements of the sensor array, **characterised in that**, for the purpose of evaluating the signal amplitudes of the transducer elements assigned to the one code track, the relative difference in brightness is ascertained between the code track signal that is relatively lighter when exposed and a relatively darker non-track signal of transducer elements that are not assigned to a code track and, depending on the determined difference in brightness, an ascertainment is carried out as to whether the transducer elements assigned to the code track are exposed or unexposed by the coding.

2. Process in accordance with Claim 1, **characterised in that** the difference in brightness is ascertained by considering the difference in the signal amplitudes of the transducer elements assigned to the one code track or to a non-code track, as the case may be, and a predetermined difference in brightness is utilised as a signal threshold value for the ascertainment as to whether the transducer elements assigned to the code track are exposed or unexposed by the coding.

3. Process in accordance with Claim 1, **characterised in that**, for the purpose of ascertaining the relative difference in brightness, the signal amplitudes of the transducer elements assigned to the one code track or to a non-code track, as the case may be, are related to each other and a predetermined correlation is utilised as a signal threshold value for the ascertainment as to whether the transducer elements assigned to the code track are exposed or unexposed by the coding.

4. Process in accordance with any of Claims 1 to 3, **characterised in that** for the ascertainment of whether the transducer elements assigned to the code track are exposed or unexposed, an absolute signal threshold value additionally has to be exceeded or undershot, as the case may be, by the signal amplitude of the transducer elements assigned to the at least one code track.

5. Process in accordance with any of Claims 2 to 4, **characterised in that** the signal threshold value is adapted to varying measuring parameters.

6. Process in accordance with Claim 5, **characterised in that** an adaptation of the signal threshold values includes the following steps:
- Detection of the signal amplitude of a reference signal of at least one transducer element that has actually been exposed by means of a code track or a reference track
- Evaluation of the signal amplitude of the reference signal
- Adaptation of the signal threshold value as regards the ascertained signal amplitude of the reference signal.

7. Process in accordance with Claim 6, **characterised in that** the step for evaluating the signal amplitude of the reference signal comprises forming a mean value over a certain number of measuring steps and conducting an adaptation of the at least one parameter relevant to signal evaluation subject to the ascertained mean value.

8. Process in accordance with Claim 6 or Claim 7, **characterised in that** the evaluation of the signal amplitude of the reference signal includes a comparison to a reference signal amplitude.

9. Process in accordance with any of Claims 6 to 8, **characterised in that** the exposure time is changed for the purpose of adapting the at least one parameter relevant to the evaluation of the signal.

10. Process in accordance with any of Claims 6 to 9, **characterised in that** the luminosity of the light source is changed for the purpose of adapting the at least one parameter relevant to the evaluation of the signal.

11. Process in accordance with any of Claims 1 to 10, **characterised in that** the signal threshold value for differentiating whether the transducer elements assigned to a code track are exposed or unexposed by the coding is changed for the purpose of adapting the at least one parameter relevant to the evaluation of the signal.

12. Application of a process in accordance with any of Claims 1 to 11 for the purpose of evaluating the signals from an optoelectronic steering angle sensor in a motor vehicle.

## Revendications

1. Procédé pour l'évaluation des signaux d'un dispositif optoélectronique de mesure de parcours ou d'angle, avec un disque codé, qui peut être déplacé par rapport à une unité d'émission/réception comprenant une source lumineuse et un réseau de capteurs, qui présente de nombreux éléments convertisseurs, avec au moins.une piste codée numérique et, au choix, au moins une piste de référence, lequel procédé comprend une association de certains éléments convertisseurs du réseau de capteurs à la piste codée au moins prévue, **caractérisé en ce que**, pour effectuer l'évaluation des amplitudes de signaux des éléments convertisseurs, associés à la piste codée au moins prévue, la différence d'intensité entre le signal de piste codée relativement plus lumineux lors d'une exposition et un signal de non-piste relativement moins lumineux d'éléments convertisseurs non associés à une piste codée.est déterminée et le fait que les éléments convertisseurs, associés à la piste codée sont exposés ou non exposés par le codage est établi en fonction de la différence de luminosité détectée.

2. Procédé selon la revendication 1, **caractérisé en ce que** la différence d'intensité est déterminée par la prise en considération de la différence des amplitudes de signaux de la piste codée, respectivement de la pite non codée et qu'une différence d'intensité prédéterminée est utilisée en tant que valeur de seuil de signal pour constater si les éléments convertisseurs associés à la piste codée sont exposés ou non exposés par le codage.

3. Procédé selon la revendication 1, **caractérisé en ce que**, pour la détermination de la différence de luminosité relative, on établit un rapport entre les amplitudes de signaux des éléments convertisseurs, associés à une piste codée, respectivement à une piste non codée, et un rapport prédéterminé est utilisé en tant que valeur de seuil de signal pour constater si les éléments convertisseurs associés à la piste codée sont exposés ou non exposés par le codage.

4. Procédé selon l'une des revendications 1 à 3, **caractérisé en ce que**, pour constater si les éléments convertisseurs associés à la piste codée sont exposés ou non exposés par le codage, une valeur de seuil de signal absolue doit, de plus, être dépassée vers le haut ou vers le bas par l'amplitude de signal des éléments convertisseurs associés à la piste codée au moins prévue.

5. Procédé selon l'une des revendications 2 à 4, **caractérisé en ce que** la valeur de seuil de signal est adaptée à des paramètres de mesure se modifiant.

6. Procédé selon la revendication 5, **caractérisé en ce qu'**une adaptation des valeurs de seuil de signal comprend les phases suivantes :
- saisie de l'amplitude de signal d'un signal de référence d'au moins un élément convertisseur réellement exposé par une piste codée ou une piste de référence,
- évaluation de l'amplitude de signal du signal de référence,
- adaptation de la valeur de seuil de signal en fonction de l'amplitude de signal du signal de référence détectée.

7. Procédé selon la revendication 6, **caractérisé en ce que** la phase de l'évaluation de l'amplitude de signal du signal de référence comprend un établissement de la valeur moyenne par exécution d'un nombre déterminé de phases de mesure et qu'une adaptation du paramètre, au moins prévu, important pour l'évaluation du signal est effectuée en fonction de la valeur moyenne déterminée.

8. Procédé selon revendication 6 ou 7, **caractérisé en ce que** l'évaluation de l'amplitude de signal du signal de référence comprend une comparaison avec une amplitude du signal de référence.

9. Procédé selon l'une des revendications 6 à 8, **caractérisé en ce que**, pour l'adaptation du paramètre au moins prévu, important pour l'évaluation de signal, le temps d'exposition est modifié.

10. Procédé selon l'une des revendications 6 à 9, **caractérisé en ce que**, pour l'adaptation du paramètre au moins prévu, important pour l'évaluation de signal, l'intensité de la source lumineuse est modifiée.

11. Procédé selon l'une des revendications 1 à 10, **caractérisé en ce que**, pour l'adaptation du paramètre au moins prévu, important pour l'évaluation de signal, la valeur de seuil de signal permettant de discerner si les éléments convertisseurs, associés à une piste codée, sont exposés ou non exposés, est modifiée.

12. Utilisation d'un procédé selon l'une des revendications 1 à 11 pour l'évaluation des signaux d'un détecteur optoélectronique d'angle de braquage d'un véhicule automobile.
